Europäisches Patentamt

(19) European Patent Office

Office européen des brevets

(11) Numéro de publication: **0 003 721**
**B1**

(12) **FASCICULE DE BREVET EUROPEEN**

(45) Date de publication du fascicule du brevet:
**18.04.84**

(21) Numéro de dépôt: **79810014.5**

(22) Date de dépôt: **08.02.79**

(51) Int. Cl.³: **A 23 B 7/00**, A 23 B 4/00,
B 65 B 31/02

(54) Procédé et installation pour blanchir et stériliser de façon rapide en continu des produits alimentaires en morceaux.

(30) Priorité: **10.02.78 CH 1483/78**

(43) Date de publication de la demande:
**22.08.79 Bulletin 79/17**

(45) Mention de la délivrance du brevet:
**18.04.84 Bulletin 84/16**

(84) Etats contractants désignés:
**BE DE FR GB IT NL SE**

(56) Documents cités:
**FR - A - 1 486 467**
**FR - A - 2 150 533**
**US - A - 2 876 558**
**US - A - 3 663 719**
**US - A - 3 794 500**
**US - A - 3 982 481**

**Encyclopedia of Food Engineering Vol. 1, p. 57 à 62 et p. 242/243**

(73) Titulaire: **Glen, Donald Graham, c/o Gold Coast Secretariat No. 3 Blue Arcade 3167 Gold Coast Highway, Surfers Paradise Queensland (AU)**

(72) Inventeur: **Donald, Graham Glen, Suite 109/658 Pittwater Road, Brookvale, 2100 (AU)**

(74) Mandataire: **Marer, Joseph, c/o Peruhag Case postale 2050, CH-3001 Berne (CH)**

# Procédé et installation pour blanchir et stériliser de façon rapide en continu des produits alimentaires en morceaux

La présente invention a pour objet un procédé et une installation pour blanchir et stériliser de façon rapide en continu des produits alimentaires en morceaux, notamment des fruits, des légumes, de la viande et du poisson.

Le brevet US-A-3 794 500 se rapporte à une installation et à un procédé pour blanchir des fruits et des légumes en morceaux par un traitement en plusieurs étapes comprenant une déshydratation partielle, un traitement à la vapeur chaude suivi d'un traitement des morceaux chauffés dans des conditions adiabatiques.

Le brevet US-A-2- 876 558 concerne une installation pour blanchir des produits alimentaires au moyen d'un fluide gazeux, les produits étant répartis sous forme d'un lit d'une épaisseur constante et étant constamment mélangés.

L'Encyclopedia of Food Engineering, Vol. 1, p. 57 à 62 et p. 242/43, expose le blanchiment de produits alimentaires et les équipements nécessaires pour obtenir l'effet visé, ainsi que les appareils pour déshydrater les produits.

Les documents cités ci-dessus consernent uniquement le blanchiment des produits pour rendre inactifs les enzymes.

Dans les procédés et installations connus, le produit alimentaire à blanchir est soumis à une température élevée pendant suffisamment de temps pour que sa structure fibreuse soit ramollie afin de faciliter la mise en boîte. Ces procédés ont tendance à endommager mécaniquement les produits traités et à en soutirer les sucres et amidons. Ce phénomène de soutirage est accentué si les opérations sont effectuées sous vide; au moment du rétablissement de la pression, les sucres et amidons qui ont été retirés de la structure de la cellule sont alors remplacés par des vapeurs condensées. Ceci a pour conséquence une augmentation du poids du produit, car la quantité d'eau absorbée est supérieure aux pertes en sucre et amidon. Toutefois, si la structure du produit reste bonne, son goût est altéré.

Le temps nécessaire pour blanchir un produit conformément aux procédés connus dépend de la conductivité dudit produit. Il est en effet nécessaire que la température extérieure à laquelle est soumis le produit pénètre jusqu'en son milieu pour que celui-ci soit blanchi correctement. Si l'on assimile le produit à une sphère, on constate que la couche extérieure est soumise à une température élevée plus longtemps que nécessaire, en raison de l'obligation d'attendre que le centre du produit ait été blanchi.

Le but de l'invention est de pallier cet inconvénient majeur des procédés connus. Le procédé est caractérisé en ce qu'on applique de la chaleur aux morceaux se déplaçant en continu dans une première zone sous pression, de façon à chauffer rapidement la couche extérieure des morceaux au moyen de vapeur chaude et/ou de gaz pour que lesdits morceaux soient fluidisés et atteignent la température de stérilisation, en ce qu'on maintient les morceaux chauffés en équilibre adiabatique, à la température de stérilisation, pendant le temps nécessaire pour inactiver ou détruire les microrganismes et enzymes tout au long de la traversée d'une seconde zone dans laquelle la pression est abaissée, en ce qu'on déplace les morceaux au travers d'une troisième zone dans laquelle on refroidit les morceaux, et en ce qu'on amène les morceaux refroidis à une unité d'empaquetage dans laquelle ils sont emballés de manière stérile.

Dans une mise en œuvre particulière, le fluide de chauffage est appliqué sous pression au produit au cours de son déplacement dans un tube vibrant ou un convoyeur en spiral incliné de 8°C à 15°C sur l'horizontale, le fluide de chauffage servant également à fluidiser le produit.

On sait que la courbe représentant le taux de destruction des microrganismes est une fonction logarithmique du temps et de la température. Le procédé objet de l'invention permet d'élever la température du produit aussi rapidement que possible de façon à équilibrer les températures extérieures et intérieures des parties pour parvenir à une stérilisation complète à une température n'affectant pas les propriétés physiques, chimiques et nutritives du produit traité.

Une fois la stérilisation obtenue, l'application de chaleur doit cesser pour éviter toute détérioration du produit, la température au centre du produit étant le facteur critique.

On sait que le transfert de chaleur dans un masse est une fonction de la différence des températures; par conséquent plus la température appliquée est élevée par rapport à la température initiale, plus vite la température désirée est obtenue.

Quand la chaleur latente de la vapeur en condensation est utilisée pour chauffer directement les morceaux du produit, une couche isolante de vapeur condensée se forme à la surface des morceaux, à une température et à une pression plus basses que celles de la vapeur, cette couche isolante par phénomène d'osmose absorbant les fluides contenus dans le produit traité.

Dans le procédé selon l'invention l'utilisation d'un fluide de chauffage, ayant également pour fonction la fluidisation du produit, a pour conséquence l'absence de couche isolante, un accroissement du transfert de chaleur en surface et finalement une meilleure conservation du produit traité.

Dans une mise en œuvre du procédé, le produit traverse rapidement une unité de chauffage en étant transporté sous forme d'une couche mince sur une courroie à texture de grille, un courant de gaz chaud et/ou de vapeurs étant appliqué aux morceaux du produit pendant le temps juste nécessaire pour amener le produit à la température requise subséquemment dans l'enceinte isolée. Le temps de stationnement du produit dans l'enceinte isolée doit permettre l'équilibre des températures des morceaux du produit, cette température d'équilibre et ce temps devant par ailleurs être suffisant pour inhiber les enzymes et détruire ou réduire le taux de croissance des microrganismes et libérer leur oxygène. Ce temps de stationnement est compris de préférence entre 1½ à 5 minutes et aucune chaleur n'est ajoutée pendant ce temps.

Selon une mise en œuvre préférée du procédé, la température désirée dans la section de chauffage est obtenue par aspersion d'eau bouillante ou de vapeur. Il est également possible de remplacer l'aspersion au départ de la section de chauffage par un courant d'air chaud dont l'humidité est réglée par injection de vapeur d'eau pour obtenir dans cette section un séchage de 10% de la partie extérieure des morceaux du produit, lesdits morceaux étant humidifiés à nouveau à la fin de la section de chauffage par aspersion d'eau bouillante.

L'invention a également pour objet une installation pour la mise en œuvre du procédé. Cette installation est caractérisée en ce qu'elle comprend une première chambre de traitement thermique avec des moyens pour supporter et transporter les produits alimentaires, des moyens pour faire circuler des gaz chauds ou des vapeurs chaudes le long de ladite chambre pour former une première zone dans laquelle les produits se déplacent en étant soumis sous pression aux gaz chauds et aux vapeurs chaudes, une seconde chambre reliée à la première chambre et dans laquelle les produits chauffés au cours de leur passage dans la première chambre sont soumis à une pression moins forte que dans cette dernière pour former une seconde zone dans laquelle les produits se déplacent et sont en équilibre adiabatique à la température de stérilisation, une unité de refroidissement reliée à la seconde chambre pour former une troisième zone dans laquelle les produits stérilisés passent et sont refroidis, et des moyens de transport reliés à l'unité de refroidissement, et à une unité d'empaquetage pour emballer les produits de manière stérile.

Selon une forme d'exécution de l'installation, le produit est transporté à l'intérieur des chambres de traitement sous forme de lit fluidisé par un gaz chaud. L'installation comprend de préférence des moyens de recyclage des gaz chauds.

Le dessin annexé représente, à titre d'exemple, diverses formes d'exécution de l'installation que comprend l'invention.

La fig. 1 est une vue générale schématique d'une première forme d'exécution de l'installation,

la fig. 2 est une vue latérale avec coupe partielle de deux dispositifs d'alimentation,

la fig. 3 est une vue latérale d'une chambre de préchauffage et de l'unité de chauffage,

la fig. 4 est une vue latérale d'une chambre d'equilibrage,

la fig. 5 est une vue latérale d'une chambre d'alimentation et de l'unité refroidissement,

la fig. 6 est une vue latérale de l'unité de décharge,

les fig. 7a et 7b sont des vues schématiques de deux unités d'empaquetage stérile,

la fig. 8 est un diagramm du bilan thermique du procédé, et

les fig. 9a et 9b illustrent les échanges thermiques en fonction du temps.

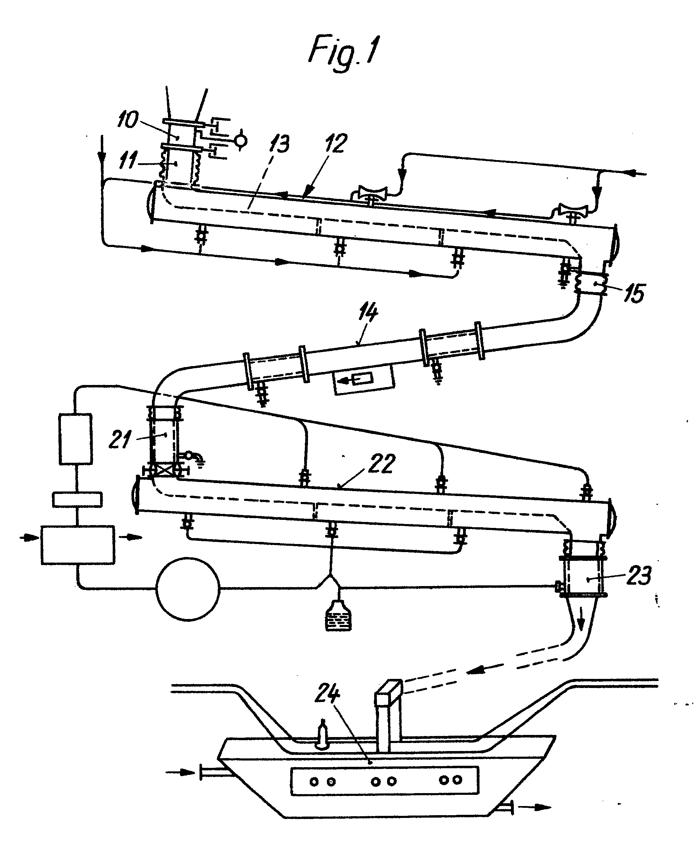

L'installation représentée à la fig. 1 comprend une unité d'alimentation 10 qui, au moyen d'un élévateur, introduit le produit à traiter dans une chambre de préchauffage 11, déshydrate partiellement la surface du produit et commande sa distribution à une vitesse constante et sous forme d'une couche mince sur un moyen de transport 13 disposé dans une unité de chauffage 12. L'unité de chauffage 12 élève la température du produit pour le stériliser et détruire les enzymes et est constituée par un tube vibrant ou un convoyeur en spiral incliné de 8 à 15° sur l'horizontale. L'unité de chauffage 12 est reliée, par un joint flexible 15, à une unité d'équilibrage adiabatique 14 dans laquelle s'effectuent les opérations de stérilisation et de blanchiment. Une chambre 21 refroidit le produit et commande sa répartition sur le transporteur d'une unité de refroidissement 22. Cette unité est semblable à l'unité de chauffage 12 et fonctionne selon le même principe. Un dispositif distributeur 23 abaisse la pression à une pression légèrement supérieure à la pression atmosphérique et délivre le produit à un dispositif d'empaquetage stérile 24.

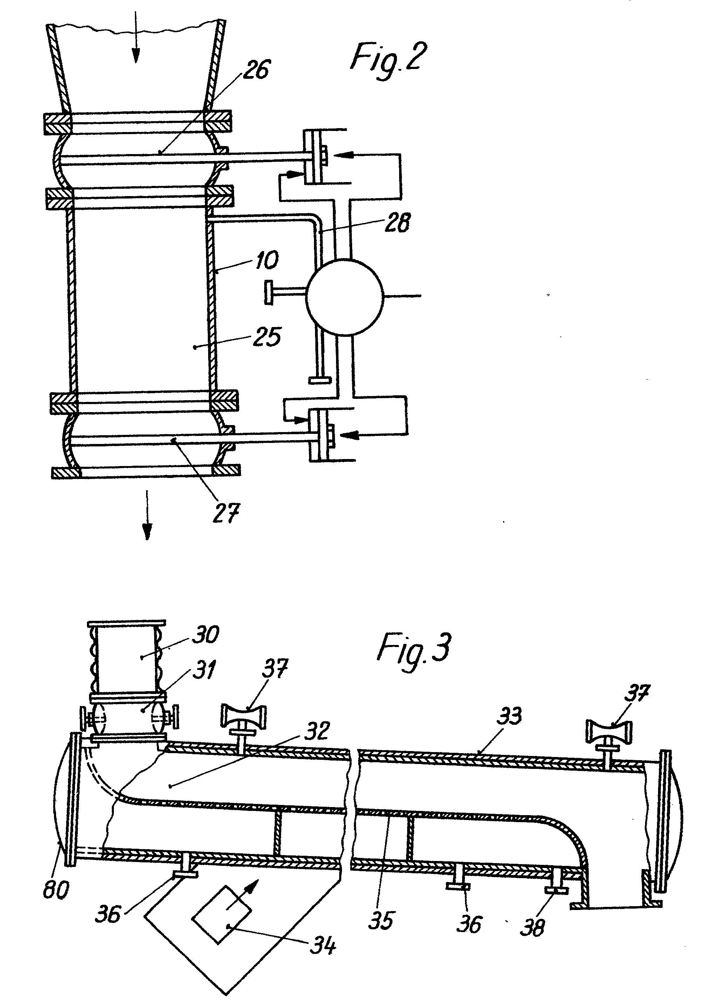

La fig. 2 représente une variante des dispositifs d'alimentation de l'unité d'alimentation 10. Chaque dispositif d'alimentation comprend une chambre sous pression 25 munie de vannes d'admission 26 et de sortie 27 à commande automatique. Une conduite 28 sert à déshydrater partiellement le produit et contribue à obliger le produit à cheminer vers l'unité de préchauffage 11.

La fig. 3 donne le détail de la chambre de l'unité de préchauffage 11 à circulation du produit sur lit fluidisé. Cette chambre est constituée par un tube d'acier inoxydable 30 à travers lequel passe le produit qui est partiellement déshydraté en surface. Une vanne 31 permet de doser le produit en 32 vers un élémenet de transport perforé 35 logé dans un cylindre en acier inoxydable 33, incliné sur l'horizontale et soumis à des vibrations par un vibrateur 34 constitué par un moteur ou par des aimants vibrants. L'élément de transport perforé 35 est disposé dans le même plan incliné que le cylindre 33. Le fluide de chauffage est introduit à la partie inférieure 36 du cylindre, traverse l'élément de transport perforé 35 et fluidise le produit à traiter. Le fluide de chauffage est ensuite récupéré en 37 et recyclé, le fluide condensé étant éliminé par un conduit d'évacuation 38.

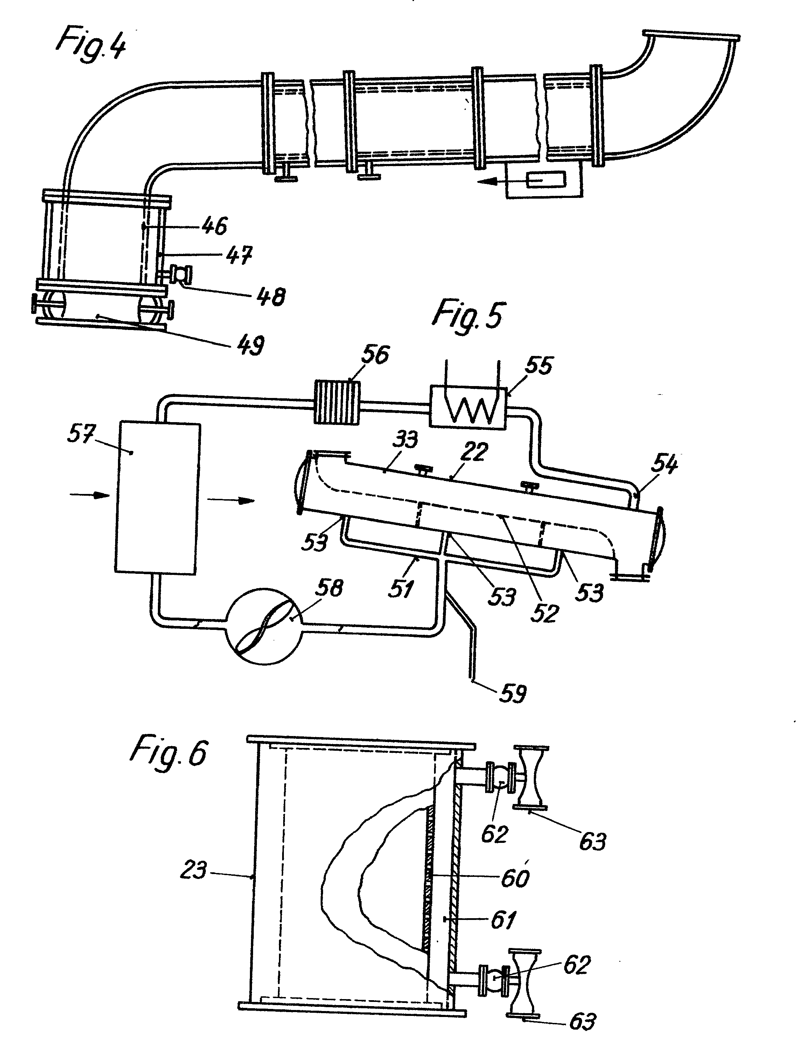

La fig. 4 représente avec plus de détails la chambre d'equilibrage adiabatique 14 qui comprend une chambre intérieure annulaire perforée 46 qui réduit la pression vers une chambre extérieure annulaire 47, la pression dans cette chambre étant commandée par une soupape d'echappement 48. A la base de la chambre intérieure 46, une soupape 49 commande, en fonction de la hauteur du produit, la distribution du produit traité sur l'élément transporteur de l'unité de refroidissement 22.

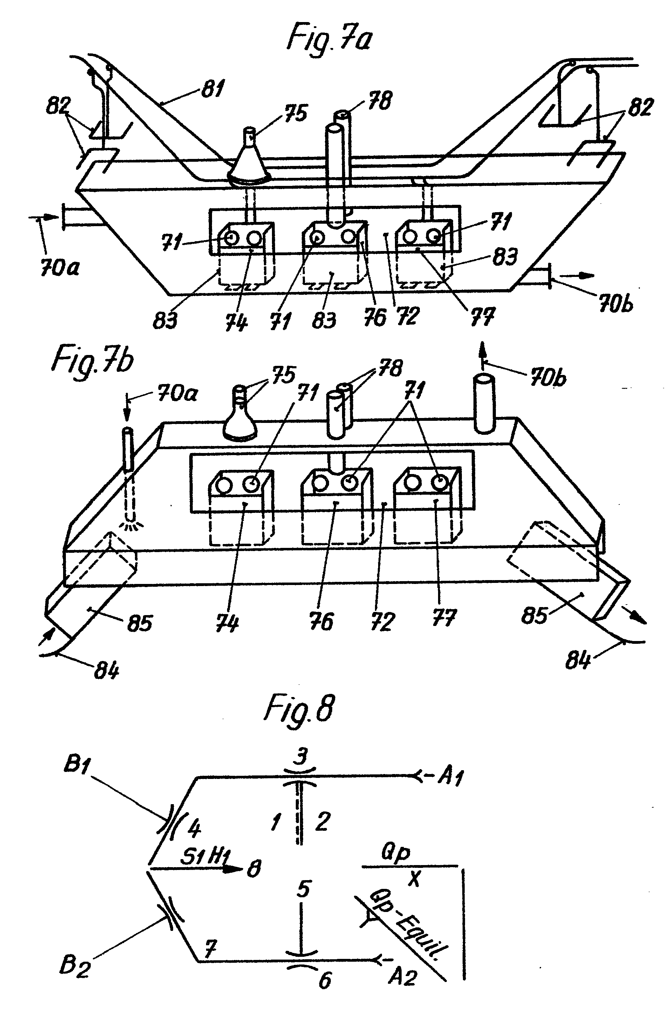

La fig. 5 représente l'unité de refroidissement 22 qui comprend un cylindre 33 du type décrit en regard de la fig. 3. Le fluide de chauffage est remplacé par un gaz de refroidissement inerte et stérile qui maintient dans le cylindre 33 une température approximative de 0°C, ledit gaz servant également à fluidiser le produit sur une plaque transporteuse perforée 52. L'unité de refroidissement fonctionne en circuit fermé. Le gaz refroidi à 0°C pénètre par un conduit 51 et par des admissions 53 dans la partie inférieure du cylindre 33, traverse la plaque transporteuse perforée 52, fluidise le produit en le refroidissant et est évacué à une température de 75°C vers un échangeur de chaleur 57 après avoir traversé un déshumidificateur 55 et un filtre à bactéries 56. Une pompe ou un ventilateur 58 renvoie le gaz au cylindre 33, un gaz liquide à température comprise entre −80° et −196°C étant vaporisé au préalable dans le gaz par la conduite 59.

La fig. 6 montre avec plus de détails le dispositif distributeur 23. Ce dernier est constitué par un tube cylindrique perforé 60 permettant d'abaisser la pression à une valeur légèrement supérieure à la pression atmosphérique dans une chambre extérieure annulaire 61 dont la pression est commandée par une soupape d'echappement 62 conduisant à un circuit fermé par l'intermédiaire d'une purge 63.

Les fig. 7a et 7b montrent deux formes d'exécution des unités d'empaquetage stérile 24. Celle de la fig. 7a comprend une admission de gaz 70a et une sortie de gaz 70b. Le produit à empaqueter arrive dans l'unité d'empaquetage par des conduites 78 et le récipient 83 (boîte ou carton) arrive de la gauche pour sortir sur la droite. Des moyens de support 82 des récipients 83 sont montés sur des rails 81 et les récipients 83 traversent une station de stérilisation 74, passent sous une station de remplissage 76 située sous les conduites 78 et dans une station de scellement 77. Ces opérations peuvent être contrôlées par une fenêtre d'observation 72 et des orifices 71 permettent une intervention manuelle en cas de nécessité. La station de stérilisation 74 est munie d'une lampe à rayons ultraviolets 75. Dans la fig. 7b, des moyens de transport 84 convoient les récipients 85 au travers de l'unité d'empaquetage en passant par la station de stérilisation 74 à rayons ultraviolets 75, par la station de remplissage 76 et par la station de scellement 77.

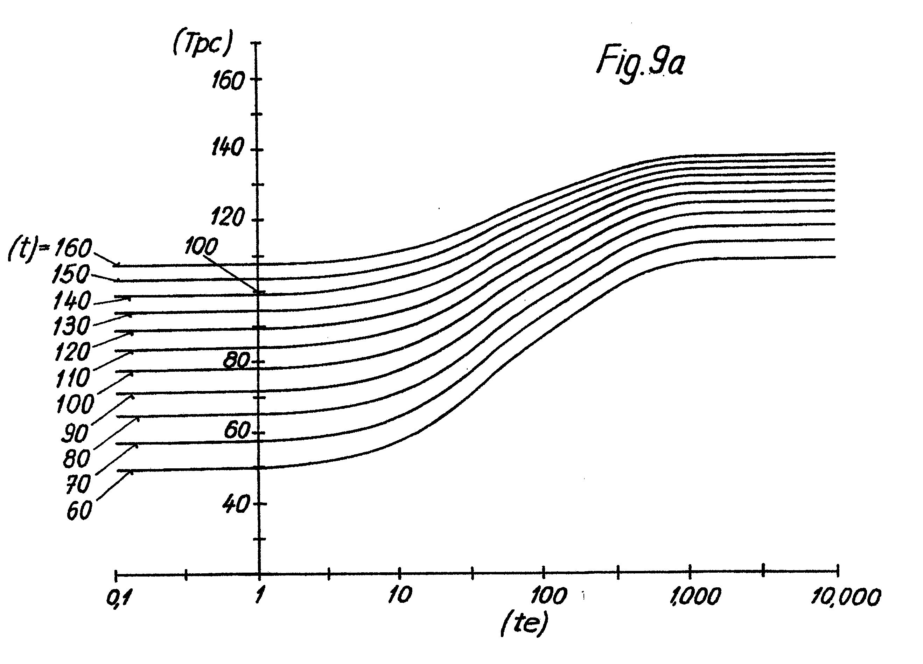

La fig. 8 donne un exemple du bilan thermique dans lequel le produit reçoit une chaleur (Qp) de 800000 Kilojoules heure, dans lequel la pression de la vapeur (SI, HI) est de 1000 kpa et dans lequel les échanges se font conformément au diagramme de la fig. 9a pour obtenir une température moyenne de 133°C en choisissant la courbe de conduction correspondant à 150°C et 380 kpa.

Dans le diagramme de la fig. 8 la vapeur est fournie en AI à 1000 Kpa à l'éjecteur 3 qui soutire les vapeurs saturées de l'unité de chauffage qui entraîne des globules de liquide 2 dans le gaz 1.

Un réchauffage des gaz est prévu en 4 au moyen d'un brûleur BI agissant sous l'élément de transport dans l'unité de chauffage 8. De plus, de la vapeur à 1000 Kpa est fournie en A2 à un injecteur 6 qui soutire en 5 les condensations de l'unité de chauffage et réinjecte en 7, par un injecteur B2, le gaz réchauffé sous l'élément de transport de l'unité de chauffage 8.

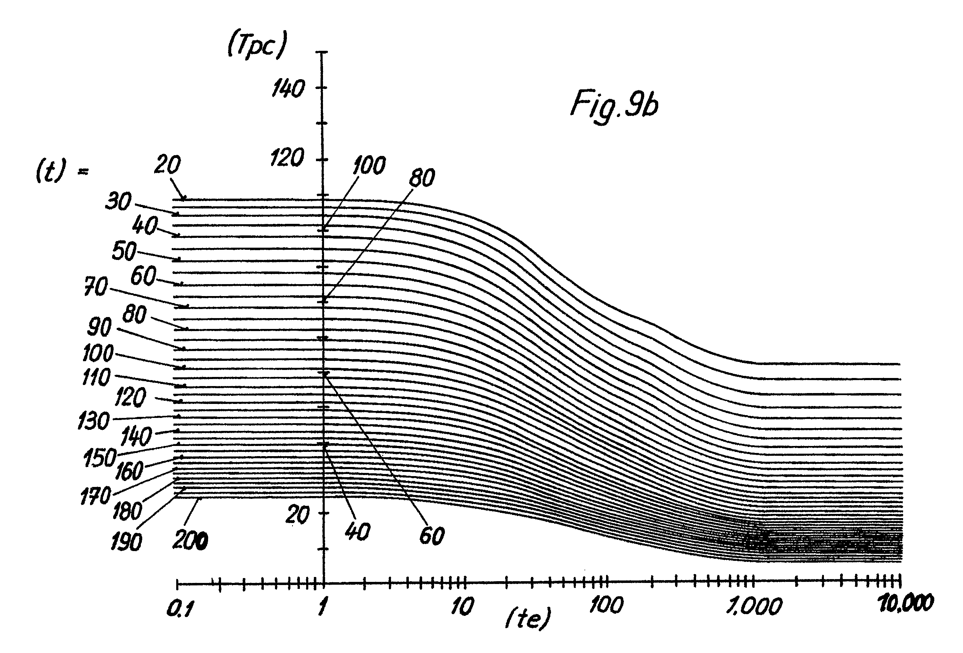

Les fig. 9a et 9b représentent une famille de courbes établies par calculatrice et relatives à un produit acide. Les courbes de la fig. 9a concernent le chauffage adiabatique en fonction du temps et les courbes de la fig. 9b les courbes de refroidissement en fonction du temps. Chaque famille de courbes a été établie en partant d'un fluide à une température donnée et pour un produit à une température initiale donnée. Chaque courbe de la famille représente le temps de chauffage ou de refroidissement nécessaire en secondes (t) en fonction de la température au centre du produit (Tpc) sur l'ordonnée par rapport au temps d'équilibrage en secondes sur l'abscisse à une échelle logarithmique (te).

## Revendications:

1. Procédé pour blanchir et stériliser de façon rapide en continu des produits alimentaires en morceaux, notamment des fruits, des légumes, de la viande et du poisson, caractérisé en ce qu'on applique de la chaleur aux morceaux se déplaçant en continu dans une première zone sous pression, de façon à chauffer rapidement la couche extérieure des morceaux au moyen de vapeur chaude et/ou de gaz pour que lesdits morceaux soient fluidisés et atteignent la température de stérilisation, en ce qu'on maintient les morceaux chauffés en équilibre adiabatique, à la température de stérilisation, pendant le temps nécessaire pour inactiver ou détruire les microrganismes et enzymes tout au long de la traversée d'une seconde zone dans laquelle la pression est abaissée, en ce qu'on déplace les morceaux au travers d'une troisième zone dans laquelle on refroidit les morceaux, et en ce qu'on amène les morceaux refroidis à une unité d'empaquetage dans laquelle ils sont emballés de manière stérile.

2. Procédé selon la revendication 1, caractérisé en ce que la vapeur chaude ou le gaz est utilisé pour fluidiser, sous condition vibratoire, les produits alimentaires.

3. Installation pour la mise en œuvre du procédé selon la revendication 1, caractérisée en ce qu'elle comprend une première chambre de traitement thermique avec des moyens pour supporter et transporter les produits alimentaires, des moyens pour faire circuler des gaz chauds ou des vapeurs chaudes le long de ladite chambre pour former une première zone dans laquelle les produits se déplacent en étant soumis sous pression aux gaz chauds et aux vapeurs chaudes, une seconde chambre reliée à la première chambre et dans laquelle les produits chauffés au cours de leur passage dans la première chambre sont soumis à une pression moins forte que dans cette dernière pour former une seconde zone dans laquelle les produits se déplacent et sont en équilibre adiabatique à la température de stérilisation, une unité de refroidissement reliée à la seconde chambre pour former une troisième zone dans laquelle les produits stérilisés passent et sont refroidis, et des moyens de transport reliés à l'unité de refroidissement et à une unité d'empaquetage pour emballer les produits de manière stérile.

4. Installation selon la revendication 3, caractérisée en ce qu'elle comprend une série de chambres de traitement interconnectées et d'unités inclinées par rapport à l'horizontale.

5. Installation selon la revendication 4, caractérisée en ce qu'elle comprend des moyens vibrants.

6. Installation selon la revendication 5, caractérisée en ce que lesdits moyens sont constitués par des plaques perforées.

7.Installation selon la revendication 3, caractérisée en ce qu'elle comprend des moyens de recyclage des gaz chauds ou des vapeurs chaudes.

## Patenansprüche

1. Verfahren zum schnellen und fortlaufenden Weissmachen und Sterilisieren von Nahrungsmitteln in Stückform, insbesondere Früchte, Gemüse, Fleisch und Fische, dadurch gekennzeichnet, dass die äussere Schicht der sich fortlaufend in einer unter Druck stehenden ersten Zone bewegenden Stücke mittels heissem Dampf und/oder Gas schnell erhitzt wird, damit diese Stücke verflüssigt und auf die Sterilisier-Temperatur gebracht werden, dass die erhitzten Stücke in adiabatischem Gleichgewicht so lange auf der Sterilisier-Temperatur gehalten werden um beim Durchgang der Stücke durch eine zweite, unter geringerem Druck stehenden Zone, die Mikroorganismen und Enzyme zu inaktivieren oder zu zerstören, dass die Stücke in einer dritten Zone abgekühlt werden und dann einer Verpackungseinheit zum sterilen Verpacken zugeführt werden.

2. Verfahren nach Anspruch 1, dadurch gekennzeichnet, dass der heisse Dampf oder das Gas zum Verflüssigen der Nahrungsmittel unter Vibrationsbedingungen dient.

3. Anlage zur Durchführung des Verfahrens gemäss Anspruch 1, dadurch gekennzeichnet, dass diese eine erste Wärmebehandlungs-Kammer aufweist, mit Mitteln zum Aufnehmen und Befördern der Nahrungsmittel, Mittel um die heissen Gase oder Dämpfe durch die genannte Kammer zu bewegen und eine erste Zone zu bilden, in welcher die Produkte unter Druck den heissen Gasen und Dämpfen ausgesetzt sind, eine zweite, mit der ersten verbundene Kammer, in welcher die in der ersten Kammer erhitzten Produkte einem geringeren Druck als demjenigen in der ersten Kammer ausgesetzt werden, um eine zweite Zone zu bilden, in welcher die Produkte verschoben und in adiabatischem Gleichgewicht auf Sterilisier-Temperatur gehalten werden, eine mit der zweiten Kammer verbundene Abkühlungs-Einheit, die eine dritte Zone bildet, in der die sterilisierten Produkte abgekühlt werden, und Beförderungsmittel, die mit der Abkühlungs-Einheit und mit der Verpackungs-Einheit verbunden sind, um die Produkte steril zu verpacken.

4. Anlage nach Anspruch 3, dadurch gekennzeichnet, dass sie eine Anzahl dazwischenliegender Behandlungskammern und inbezug auf eine Horizontale geneigte Einheiten aufweist.

5. Anlage nach Anspruch 4, dadurch gekennzeichnet, dass sie Vibrationsmittel aufweist.

6. Anlage nach Anspruch 5, dadurch gekennzeichnet, dass die genannten Mittel Lochplatten sind.

7. Anlage nach Anspruch 3, dadurch gekennzeichnet, dass sie Mittel zum Wiederverwerten der heissen Gase oder Dämpfe aufweist.

## Claims

1. A process to blanch and sterilise quickly in a continuous manner food products in pieces, in particular fruit, vegetables, meat and fish, characterised in that heat is applied to the pieces moving continuously through a first zone under pressure, so as to quickly theat the external layer of the pieces by means of hot vapour and/or gas in order that said pieces may be fluidised and may reach the temperature of sterilisation, in that the heated pieces are kept in adiabatic equilibrium, at the temperature of sterilisation, during the time necessary to inactivate or destroy the microorganisms and enzymes all through the crossing of a second zone in which the pieces are cooled, and in that the cooled pieces are conveyed to a packing unit where they are packed under sterile conditions.

2. A process according to claim 1, characterised in that the hot vapour or gas is used to fluidize the food products under vibrating conditions.

3. A plant for the implementation of the process according to claim 1, characterised in that it comprises a first chamber for thermal treatment with means of supporting and conveying the food products, means of circulating the hot gases or hot vapours through the said chamber to form a first zone in which the products move while being subjected to the hot gases and hot vapours, a second chamber linked to the first in which the products heated while passing through the first chamber are subjected to a lesser pressure than in the latter to form a second zone in which the products move and are in adiabatic equilibrium at the temperature of sterilisation, a cooling unit linked to the second chamber to form a third zone in which the sterilised products pass and are cooled, and means of transport linked to the cooling unit and to a packing unit to pack the products in a sterile manner.

4. A plant according to claim 3, characterised in that it comprises a series of interconnected treatment chambers and of units inclined in relation to the horizontal.

5. A plant according to claim 4, characterised in that it comprises vibrating means.

6. A plant according to claim 5, characterised in that the said means are constituted by perforated plates.

7. A plant according to claim 3, characterised in that it comprises means of recycling the hot gases or the hot vapours.

# Fig.1

Fig.2

Fig.3

*Fig.4*

46

47

48

49

*Fig.5*

56

55

57

33

22

54

53

51

53

52

53

58

59

*Fig.6*

62

63

23

60

61

62

63

0003721

Fig. 7a

Fig. 7b

Fig. 8

13

Fig.9a

Fig.9b